Europäisches Patentamt

European Patent Office

Office européen des brevets

(19)

(11) **EP 0 950 003 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(51) Int Cl.⁷: **B60S 1/08**

(21) Anmeldenummer: **97954694.2**

(22) Anmeldetag: **16.12.1997**

(86) Internationale Anmeldenummer:
**PCT/DE97/02920**

(87) Internationale Veröffentlichungsnummer:
**WO 98/30422 (16.07.1998 Gazette 1998/28)**

(54) **VORRICHTUNG UND VERFAHREN FÜR EINE SCHEIBENWISCHANLAGE**

DEVICE AND METHOD FOR A WIPING SYSTEM

DISPOSITIF ET PROCEDE POUR SYSTEME D'ESSUIE-GLACE

(84) Benannte Vertragsstaaten:
**DE ES FR GB IT**

(30) Priorität: **09.01.1997 DE 19700457**

(43) Veröffentlichungstag der Anmeldung:
**20.10.1999 Patentblatt 1999/42**

(73) Patentinhaber: **ROBERT BOSCH GMBH**
**70442 Stuttgart (DE)**

(72) Erfinder:
• **MICHENFELDER, Gebhard**
**D-76473 Iffezheim (DE)**
• **MAY, Michael**
**D-77654 Offenburg (DE)**

(56) Entgegenhaltungen:
FR-A- 2 718 258    US-A- 4 314 186
US-A- 4 866 357    US-A- 5 049 794

## Beschreibung

Stand der Technik

Die Erfindung geht aus von einer Scheibenwischvorrichtung nach dem Oberbegriff des Hauptanspruchs. Es ist bereits eine Vorrichtung und ein Verfahren für eine geregelte Scheibenwischanlage für Fahrzeuge (DE-32 08 121 A1) bekannt. Der Regelkreis weist dort einen Positionsregler auf, der eine Stellgröße an den Motorschaltkreis abgibt und dem einerseits die Drehlage der Motorabtriebswelle als Regelgröße und andererseits ein vorgebbarer gewünschter Ablauf der Wischerbewegung als zeitabhängige Führungsgröße zugeführt wird.

Aus der US-A-5,177,418 ist eine Wischeranlage bekannt, die einen Regelkreis mit einem Zeitgeber aufweist, der über einen Zähler einen Funktionsgenerator als Führungsgrößengeber ansteuert. Bei Überschreiten einer bestimmten erlaubten Differenz zwischen Regelgröße und Führungsgröße wird die Führungsgrößenvorgabe angehalten, bis die Differenz wieder kleiner als die erlaubte Differenz ist.

Generell beeinflußt der Regler die Regelgröße mit Hilfe der Stellgröße so, daß die Regelabweichung (Führungsgröße minus Regelgröße) möglichst klein wird. Die Regelabweichung bei einer dynamischen, zeitabhängigen Regelung kann jedoch nicht beliebig verringert werden, z. B. durch Erhöhung der Regelkreisverstärkung, da die Änderung der Stellgröße und die Auswirkung auf die Regelgröße zeitverschoben sind und die damit dann unvermeidlichen Phasenverschiebungen in dem Regelkreis zu Schwingungen führen würden (U. Tietze, Ch. Schenk, Halbleiterschaltungstechnik, 5. Auflage, S. 688 ff).

Aufgrund der durch den Fahrzeughersteller gewünschten Kostenreduzierung wird außerdem häufig auf stärkere Motoren, schnellere Rechner usw. in einem Regelkreis verzichtet. Das wiederum führt ebenfalls zu einer größeren Regelabweichung.

Vorteile der Erfindung

Die erfindungsgemäße Vorrichtung und das erfindungsgemäße Verfahren für eine Scheibenwischanlage mit den kennzeichnenden Merkmalen des Hauptanspruchs hat den Vorteil, daß die Regelabweichung ausgeglichen wird. Es wird eine Korrekturgröße ermittelt, die der Regelabweichung entspricht und die die Führungsgröße gerade so korrigiert, daß die Differenz zwischen der nicht korrigierten Führungsgröße und der nachgeführten Regelgröße in etwa null wird.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist, daß die Korrekturgröße aus der Abweichung zwischen nur mindestens zwei Größen zu bestimmen ist, nämlich aus der Regelgröße und aus der Führungsgröße und daß weitere Parameter, wie z. B. die Stellgröße oder aus den vorab genannten Größen abgeleitete Größen, zur Bestimmung der Korrekturgröße herangezogen werden können.

Besonders vorteilhaft ist weiterhin, daß der Wischbereich in zwei Bereiche unterteilt wird. Verläßt der Wischer eine seiner beiden Endpositionen bzw. Umkehrlagen, so wird in dem ersten durchwischten Bereich anhand der gemessenen und gespeicherten Werte der Regelgröße und der Stellgröße eine Korrekturgröße ermittelt. Mit dieser Korrekturgröße wird in dem nachfolgenden zweiten Bereich die Führungsgröße korrigiert, so daß der Wischer unter Berücksichtigung von äußeren Einflüssen bzw. Störgrößen seine andere vorgesehene Endposition bzw. Umkehrlage exakt erreicht.

Vorteilhaft ist weiterhin, daß in die Führungsgröße die Systemelastizitäten der Wischanlage, unter Berücksichtigung der Wischgeschwindigkeit und der Steifigkeit der Wischanlage einbezogen werden, so daß der Wischbereich unabhängig von den Elastizitäten und damit immer identisch ist.

Zeichnung

Ein Ausführungsbeispiel der Erfindung ist in der Zeichnung dargestellt und in der nachfolgenden Beschreibung näher erläutert. Es zeigen

Figur 1 eine geregelte Scheibenwischvorrichtung für eine Scheibenwischanlage,
Figur 2 ein Diagramm der Wischerposition als Funktion der Zeit.

Beschreibung des Ausführungsbeispieles

Die Scheibenwischvorrichtung 10 weist eine Regeleinheit 12 und einen durch die Regeleinheit 12 geregelten Motor 14 auf. Der elektronisch reversierbare Motor 14 treibt über ein nicht dargestelltes Getriebe einen Wischer 16 so an, daß er zwischen zwei Endpositionen 18.1 und 18.2 hin und her pendelt oder in die weitere Endposition 18.3 abgelegt wird. Die Regeleinheit 12 weist einen Zähler 20 und eine Auswerteeinheit 22 mit Timer 23 zur Vorgabe einer Wischzykluszeit auf. An einer geeigneten Stelle des Motors 14, beispielsweise der Ankerwelle oder der Abtriebswelle, befinden sich Mittel zu deren Positionserfassung 24, die Positions-Istwerte Xist als Regelgröße R über einen ersten Ist-Signal-Eingang 28 der Regeleinheit 12 an den Zähler 20 bereitstellen. Über einen Signalausgang 30 der Regeleinheit 12 wird ein Motorspannungssignal Um an den Motor 14 geleitet, um diesen in gewünschter Betriebsart geregelt zu betreiben.

Ein Endpositionssensor 36 am Motor 14 liefert jedesmal dann dem Zähler 20 ein Referenzsignal Xref, wenn der Wischer 16 in die durch den Endpositionssensor 36 überwachte Endposition, Umkehrposition oder Parklage gelangt.

Ein durch den Fahrer manuell betätigbares Bedienelement 38 für die Wischanlage führt Betriebsartensignale 40 der Regeleinheit 12 zu. Diese Betriebsartensignale lösen beispielsweise verschiedene Geschwindigkeits- und/oder Intervallstufen des Wischers 16 aus.

Über einen weiteren Signaleingang 42 der Regeleinheit 12 kann ein durch einen Regensensor 44 bereitgestelltes weiteres Eingangssignal 46, z. B. für Wischintervalle oder Wischgeschwindigkeiten, zugeführt werden.

Der durch den Wischer 16 überstrichene, gestrichelt angedeutete Wischbereich 48 ist in zwei Bereiche 1 und 2 aufgeteilt.

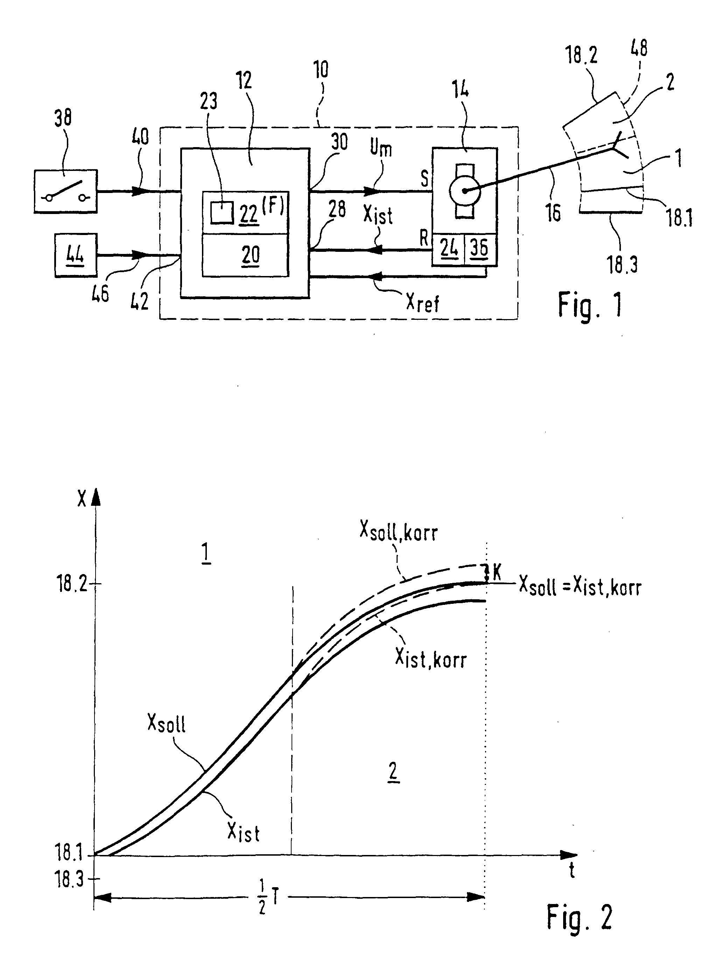

Figur 2 zeigt ein Diagramm der Position X des Scheibenwischers auf der Kfz-Scheibe als Funktion der Zeit t. Auf der Positionsachse X sind die beiden Endpositionen 18.1 und 18.2 eingetragen. Auf der Zeitachse t ist die halbe Wischzyklusdauer $\frac{1}{2}$T aufgetragen, die der Bewegung des Wischers 16 von der ersten Endposition 18.1 zu der zweiten Endposition 18.2 entspricht.

Die Kurven stellen die Position X des Wischers 16 zu einem bestimmten Zeitpunkt t dar. Die obere der beiden durchgezogenen Kurven entspricht der Positions-Sollwertkurve Xsoll, die der Wischer 16 im Idealfall beschreibt. Zum Zeitpunkt t = 0 beginnt die Kurve exakt in der Endposition 18.1 und endet zum Zeitpunkt t = $\frac{1}{2}$T exakt in der Endposition 18.2. Die untere durchgezogene Kurve stellt den tatsächlichen Verlauf der Positions-Istwerte Xist über die Zeit t dar.

Das Diagramm ist in zwei Bereiche aufgeteilt. Der erste Bereich 1 entspricht gemäß Figur 1 dem durch den Wischer 16 nach Verlassen einer Endposition 18.1 als erstes durchlaufenen Bereich 1, der zweite Bereich 2 den nachfolgend durchlaufenen Bereich 2 in Figur 1. Im zweiten Bereich 2 sind gestrichelte Kurvenverläufe angedeutet, dabei entspricht der obere Kurvenverlauf der korrigierten Positions-Sollwertkurve Xsoll, korr und der untere Kurvenverlauf der daraus resultierenden korrigierten Positions-Istwertkurve Xist, korr. Die Korrekturgröße K entspricht der Differenz von Positions-Sollwert Xsoll und korrigiertem Positions-Sollwert Xsoll, korr zum Zeitpunkt t = $\frac{1}{2}$T, die von der Regeleinheit 12 für jeden Wischgang ermittelt wird.

Die Funktionsweise der erfinderischen Scheibenwischvorrichtung nach Figur 1 wird nunmehr anhand Figur 2 beschrieben:

In der Regeleinheit 12 zur Regelung der Wischerposition X werden Positions-Sollwerte Xsoll als Führungsgröße F in einer als Mikrocontroller ausgelegten Auswerteeinheit 22 abgelegt. Die Führungsgröße F ändert sich mit der Zeit t, so wie in Figur 2 durch die obere durchgezogene Linie Xsoll dargestellt. Zur Realisierung der Positions-Sollwerte Xsoll wird mit einer jeweiligen zeitabhängigen Spannung Um der Motor 14 angesteuert und der Wischer 16 zwischen den Endpositionen 18.1, 18.2 des Wischbereichs 48 hin und her bewegt.

Währenddessen werden durch Mittel zur Positionserfassung 24 Positions-Istwerte Xist abgegriffen. Hierfür werden vorzugsweise, an der Ankerwelle des Motors 14 durch zwei Hallsensoren in Verbindung mit einem Ringmagneten am Motor 14 Impulse erzeugt. Diese werden einem Zähler 20 in der Regeleinheit 12 zugeführt, der daraus die Ist-Position Xist des Wischers 16 ermittelt. Beispielsweise kann der gesamte Wischbereich von ca. 90 Grad durch 200 Impulse beschrieben und die Ist-Position Xist des Wischers 16 im Wischbereich 48 auf einen Winkel von ca. 0,5 Grad genau zugeordnet werden.

Zum Justieren des Zählers 20 wird dem Zähler 20 ein Referenzsignal Xref zugeführt. Dieses Referenzsignal Xref wird durch einen Endpositionssensor 36 erhalten, der beispielsweise über eine Kontaktscheibe oder einen weiteren Hallsensor vorzugsweise ein Endpositionssignal oder ein Parklagensignal des Wischers 16 erfaßt. Dem Zähler 20 wird durch das Referenzsignal Xref ein Nullpunktsignal zugeführt. Ein Inkrementalwertgeber als Zähler 20 wird durch die Nullpunktssignale zurückgesetzt.

Die Auswerteeinheit 22 vergleicht nun die Positions-Istwerte Xist als Regelgröße R mit den Positions-Sollwerten Xsoll als Führungsgröße F und regelt bei Abweichung der beiden Größen R, F die Spannung Um am Motor 14 als Stellgröße S.

Die Störgrößen des Regelkreises ergeben sich nun aufgrund der Fahrtgeschwindigkeit des Kraftfahrzeugs, den

Windverhältnissen oder der Feuchtigkeit auf der Scheibe. Durch Fahrzeuggeschwindigkeit oder Wind lasten zusätzliche Kräfte auf dem Wischer 16, die dazu führen, daß die Ist-Position Xist von der Sollposition Xsoll mehr oder weniger abweicht. Ebenso beeinflußt die Feuchtigkeit auf einer nicht dargestellten Windschutzscheibe die Reibung zwischen dem Wischerblatt des Wischers 16 und der Scheibe und somit die Geschwindigkeit des Wischers 16 und seine Ist-Position Xist. Bei der Positions-Istwertkurve Xist gemäß Figur 2 liegt beispielsweise eine trockene Wischfläche 48 vor. Der Wischer 16 erreicht folglich nach einer halben Wischzyklusdauer T nicht die Endposition 18.2 sondern lediglich eine Position vor der Endposition 18.2.

Die mechanischen Systemelastizitäten des Wischersystems, die ebenfalls zu einer Abweichung von der gewünschten Endposition führen, werden durch die Programmierung der Regelung, z. B. vom Fahrzeughersteller, unter Berücksichtigung von Wischgeschwindigkeit und Steifigkeit der Wischanlage kompensiert.

Wie bereits eingangs beschrieben, kommt es bei den gewählten Systemkomponenten Motor 14 und Regeleinheit 12 bei einer dynamischen Regelung zu variablen Regelabweichungen. Die Korrektur dieser variablen Regelabweichung, genauer der Differenz von Sollposition Xsoll und Istposition Xist zum Zeitpunkt t = $\frac{1}{2}$T, wird durch die erfindungsgemäße Scheibenwischvorrichtung folgendermaßen realisiert:

Der Wischbereich 48 wird in zwei Bereiche 1,2 unterteilt, die beide jeweils die Hälfte der halben Wischzyklusdauer $\frac{1}{2}$T ausmachen. Wird der Wischer 16 durch die Regeleinheit 12 nun derart angesteuert, daß er beispielsweise die Endposition 18.1 verläßt und sich in Richtung seiner zweiten Endposition 18.2 bewegt, so durchwischt er definitionsgemäß zunächst den ersten Bereich 1 des Wischbereichs 48.

In dem ersten Bereich 1 wird die zeitabhängige Abweichung zwischen Führungsgröße F und Regelgröße R ermittelt. Als weitere Parameter zur Bestimmung der Korrekturgröße K werden Motordrehzahlwerte aus der Regelgröße R abgeleitet, die in der Auswerteeinheit 22 gespeichert werden. Ebenfalls wird die Stellgröße S als weiterer Parameter herangezogen, mit der der Motor 14 im ersten Bereich 1 angesteuert wird. Beide Größen R, F und die zusätzlich ermittelten weiteren Parameter sowie die prinzipiell bekannten Elastizitäten der Wischeranlage werden nach einem vorgebbaren Regelalgorithmus ausgewertet, beispielsweise gewichtet oder gemittelt usw., und zur Bestimmung einer Korrekturgröße K verwendet. Diese Korrekturgröße K ist derart gewählt, daß die Positions-Istwertkurve Xist mit der nicht korrigierten Positions-Sollwertkurve Xsoll wenigstens zum Zeitpunkt t = $\frac{1}{2}$T übereinstimmt.

Die im ersten Bereich 1 aus der Abweichung ermittelte Korrekturgröße K führt nun dazu, daß im zweiten Bereich 2 die Positions-Sollwertkurve Xsoll korrigiert wird, so daß nunmehr nicht die durchgezogene Linie Xsoll, sondern die darüberliegende, gestrichelte Linie Xsoll, korr für die Regelung des Wischermotors 14 angewandt wird. Durch die Regelung nach der korrigierten Positions-Sollwertkurve Xsoll,korr als neue Führungsgröße F werden die Positions-Istwerte Xist nachgeführt, so daß die Wischbewegung der gestrichelt eingezeichneten, korrigierten Positions-Istwertkurve Xist, korr entspricht. Der Wischer 16 fährt nun die vorgesehene Endposition 18.2 unter Berücksichtigung des realen Regelkreises an.

In der nicht dargestellten zweiten Hälfte der Wischzyklusdauer T verläßt der Wischer 16 die Endposition 18.2 und kehrt zur Endposition 18.1 zurück. Die Korrektur der Positions-Sollwertkurve Xsoll verläuft nun äquivalent: Der erste Bereich, in dem die Korrekturgröße K ermittelt wird, schließt sich nun direkt nach dem Zeitpunkt t = $\frac{1}{2}$T an und dauert bis zu dem Zeitpunkt t = $\frac{3}{4}$T. In dem nachfolgenden zweiten Bereich von t = $\frac{3}{4}$T bis t = T wird wiederum die Korrektur der Positions-Sollwertkurve Xsoll nach dem oben beschriebenen Verfahren vorgenommen.

In alternativen Ausführungsbeispielen kann der Wischbereich 48 in zwei Bereiche 1, 2 unterteilt werden, die beispielsweise ein Drittel und zwei Drittel der halben Wischzyklusdauer $\frac{1}{2}$T usw. ausmachen. Ebenfalls kann anstelle der Zeit t die Position X als Maß für die Unterteilung des Wischbereichs 48 als auch für die Korrekturgröße K verwendet werden.

Das Ausführungsbeispiel sieht ferner ein Bedienelement 38 vor, mit dem der Fahrer des Kraftfahrzeugs beispielsweise verschiedene Geschwindigkeits- und Intervallstufen des Wischers 16 vorgeben kann. Zu den durch das Bedienelement 38 auslösbaren Betriebsartensignalen 40, gibt der Timer 23 der zeitabhängigen Führungsgröße F unterschiedliche Wischzyklusdauern T vor. In Figur 2 wird bei der Wahl einer schnelleren bzw. langsameren Geschwindigkeitsstufe des Wischers 16 die Zeitachse t gestaucht bzw. gestreckt (Multiplikation mit einem Faktor kleiner bzw. größer als eins), so daß die Positions-Sollwerte Xsoll die Strecke zwischen den beiden Endpositionen 18.1, 18.2 in einer kürzeren bzw. längeren Wischzyklusdauer T zurücklegen.

Mit Hilfe des Bedienelementes 38 kann der Wischbetrieb auch ausgeschaltet werden. Hierfür wird der Wischer 14 in die Parklage bzw. die weitere Endposition 18.3 abgelegt, die einer anderen Positions-Sollwertkurve Xsoll als Führungsgröße F entspricht und ebenfalls in der Auswerteeinheit 22 abgelegt ist.

In einer Weiterbildung des Ausführungsbeispiels liefert ein Regensensor 44 weitere Eingangssignale 46 an die Regeleinheit 12, denen die Regeleinheit 12 kontinuierlich einzustellende Geschwindigkeitsstufen des Wischers 16 zuordnet. Es ist also möglich, die Führungsgröße F auf beliebige, kontinuierlich wählbare Wischzyklusdauern T zu beziehen.

Die Vorgabe von zwei oder mehreren unterschiedlichen zeitabhängigen Führungsgrößen F ermöglicht den synchronen Betrieb von zwei oder mehreren Wischermotoren.

**Patentansprüche**

**1.** Scheibenwischvorrichtung (10), insbesondere für Kraftfahrzeuge, zur Regelung der Position (X) von wenigstens einem zwischen zwei Endpositionen (18.1, 18.2, 18.3) pendelndem Wischer (16), mit einem elektronisch reversierbaren Antriebsmotor (14) und einer Regeleinheit (12), die eine Regelgröße (R), insbesondere Positions-Istwerte (Xist) des Motors (14), mit einer Führungsgröße (F), insbesondere vorgebbare Positions-Sollwerte (Xsoll) des Motors (14) und damit des Wischers (16), vergleicht und durch eine Stellgröße (S), insbesondere der Motorspannung (Um), den Motor (14) regelt, wobei wenigstens eine Größe aus der Abweichung von Führungsgröße (F) und Regelgröße (R) zur Ermittlung einer Korrektur verwendet wird, **dadurch gekennzeichnet, daß** der zwischen den Endpositionen (18.1, 18.2, 18.3) befindliche Wischbereich (48) in zwei Bereiche (1, 2) unterteilt ist und die Korrektur eine im ersten Bereich (1) bestimmte Korrekturgröße ist, die im nachfolgenden zweiten Bereich (2) die Führungsgröße (F) korrigiert.

**2.** Vorrichtung (10) nach Anspruch 1, **dadurch gekennzeichnet, daß** zur Bestimmung der Korrekturgröße (K) zusätzlich weitere Parameter verwendet werden, vorzugsweise die Stellgröße (S) oder aus der Regelgröße (R) abgeleitete Größen, insbesondere Motordrehzahlwerte.

3. Vorrichtung (10) nach Anspruch 1 oder 2, **dadurch gekennzeichnet, daß** der zwischen den zwei Endpositionen (18.1, 18.2, 18.3) befindliche Wischbereich (48) in zwei Bereiche (1, 2) aufgeteilt ist, wobei in dem ersten Bereich (1), in dem sich der Wischer (16) nach Verlassen einer der beiden Endpositionen (18.1, 18.2, 18.3) befindet, die Korrekturgröße (K) bestimmt wird und in dem zweiten nachfolgenden Bereich (2) die Führungsgröße (F) mittels der Korrekturgröße (K) korrigiert ist.

4. Vorrichtung (10) nach Anspruch 3, **dadurch gekennzeichnet, daß** die zwei Bereiche (1, 2) den Wischbereich (48) hälftig oder zu ein Drittel/zwei Drittel aufteilen.

5. Vorrichtung (10) nach Anspruch 1 oder 2, **dadurch gekennzeichnet, daß** ein Bedienelement Betriebsartensignale (40) bereitstellt, denen durch die Regeleinheit (12) wenigstens eine Geschwindigkeitsstufe des Wischers (16) zuzuordnen sind.

6. Vorrichtung (10) nach Anspruch 5, **dadurch gekennzeichnet, daß** zu jeder Geschwindigkeitsstufe unterschiedliche Positions-Sollwerte (Xsoll) in Abhängigkeit von der Zeit (t) als Führungsgröße (F) vorgegeben sind.

7. Vorrichtung (10) nach Anspruch 1, **dadurch gekennzeichnet, daß** sie einen Eingangssignale (46) bereitstellenden Regensensor (44) enthält, wobei die Eingangssignale (46) des Regensensors (44) einer durch den Regensensor (44) auf einer Scheibe im Wischbereich (48) der Wischer (16) detektierten Feuchtigkeitsmenge entsprechen, denen durch die Regeleinheit (12) eine Wischgeschwindigkeit des Wischers (16) zuzuordnen sind.

8. Vorrichtung (10) nach Anspruch 1, **dadurch gekennzeichnet**, daß der Regeleinheit (12) ein Endpositionssignal und/oder ein Parklagensignal eines entsprechenden Endpositionssensors (36), insbesondere eines Hallsensors oder einer Kontaktscheibe, als Referenzsignal (Xref) zuzuführen sind.

9. Vorrichtung (10) nach Anspruch 1, **dadurch gekennzeichnet, daß** die Führungsgröße (F) zeitabhängig verändert wird.

10. Verfahren zur Regelung der Position für einen zwischen zwei Endpositionen (18.1, 18.2, 18.3) pendelnden Scheibenwischer (16), insbesondere für Kraftfahrzeuge, mit einem elektronisch reversierbaren Antriebsmotor (14) und einer Regeleinheit (12), die eine Regelgröße (R), insbesondere Positions-Istwerte (Xist) des Motors (14), mit einer Führungsgröße (F), insbesondere vorgebbare Positions-Sollwerte (Xsoll) des Motors (14) und damit des Wischers (16), vergleicht und durch eine Stellgröße (S), insbesondere die Motorspannung (Um), den Motor (14) regelt, **dadurch gekennzeichnet, daß** der zwischen den Endpositionen (18.1, 18.2, 18.3) befindliche Wischbereich (48) in zwei Bereiche (1, 2) unterteilt wird und in dem ersten Bereich (1) wenigstens die Regelgröße (R) oder eine daraus abgeleitete Größe, vorzugsweise Motordrehzahlwerte, und/oder die Stellgröße (S), vorzugsweise die Motorspannung (Um), in einer Auswerteeinheit (22) der Regeleinheit (12) gespeichert und/oder gewichtet werden und daß aus der Abweichung der Regelgröße (R) von der Führungsgröße (F) zusammen mit den gespeicherten und/oder gewichteten Größen eine Korrekturgröße (K) bestimmt wird, mit der in dem nachfolgenden zweiten Bereich (2) die Führungsgröße (F) des Regelkreises, insbesondere die Positions-Sollwerte (Xsoll) des Motors (14), korrigiert wird.

11. Verfahren nach Anspruch 10, **dadurch gekennzeichnet, daß** die Korrekturgröße (K) in der als Mikrocontroller ausgeführten Auswerteeinheit (22) nach einem vorgebbaren Regelalgorithmus bestimmt wird.

12. Verfahren nach Anspruch 10, **dadurch gekennzeichnet, daß** die Führungsgröße (F) durch ein Betriebsartensignal (40) eines Bedienelements (38) und/oder durch ein Eingangssignal (46) eines Regensensors (44), insbesondere zur Festlegung wenigstens einer Geschwindigkeitsstufe des Wischers (16), auf wenigstens eine Wischzyklusdauer (T) vorgegeben wird.

**Claims**

1. Windscreen-wiping apparatus (10), in particular for motor vehicles, for controlling the position (X) of at least one wiper (16) that oscillates between two end positions (18.1, 18.2, 18.3), having an electronically reversible drive motor (14) and a control unit (12) that compares a controlled variable (R), in particular actual position values (Xist) of the motor (14), with a reference variable (F), in particular specifiable desired position values (Xsoll) of the motor (14) and hence of the wiper (16), and controls the motor (14) by means of a manipulated variable (S), in particular the motor voltage (Um), at least one variable derived from the deviation between the reference variable (F) and the controlled variable (R) being used to determine a correction, **characterized in that** the wiping zone (48), which is located between the end positions (18.1, 18.2, 18.3), is divided into two zones (1, 2) and the correction is a correction variable determined in the first zone (1), which corrects the reference variable (F) in the subsequent second zone (2).

2. Apparatus (10) according to Claim 1, **characterized in that** further parameters are additionally used to determine the correction variable (K), preferably the manipulated variable (S) or variables derived from the controlled variable (R), in particular motor-speed values.

3. Apparatus (10) according to Claim 1 or 2, **characterized in that** the wiping zone (48), which is located between the two end positions (18.1, 18.2, 18.3), is divided into two zones (1, 2), the correction variable (K) being determined in the first zone (1), in which the wiper (16) is located after leaving one of the two end positions (18.1, 18.2, 18.3), and the reference variable (F) being corrected by means of the correction variable (K) in the second, subsequent, zone (2).

4. Apparatus (10) according to Claim 3, **characterized in that** the two zones (1, 2) divide the wiping zone (48) in half or in a ratio of one third to two thirds.

5. Apparatus (10) according to Claim 1 or 2, **characterized in that** an operating element provides operating-mode signals (40), to which at least one speed level of the wiper (16) is to be assigned by the control unit (12).

6. Apparatus (10) according to Claim 5, **characterized in that** different desired position values (Xsoll) are specified as a function of time (t) as the reference variable (F) for each speed level.

7. Apparatus (10) according to Claim 1, **characterized in that** it includes a rain sensor (44) that provides input signals (46), the input signals (46) of the rain sensor (44) corresponding to a quantity of moisture detected by the rain sensor (44) on a window in the wiping zone (48) of the wipers (16), to which signals a wiping speed of the wiper (16) is to be assigned by the control unit (12).

8. Apparatus (10) according to Claim 1, **characterized in that** the control unit (12) is to be supplied with an end position signal and/or a parked position signal from a corresponding end position sensor (36), in particular a Hall-effect sensor or a contact washer, as a reference signal (Xref).

9. Apparatus (10) according to Claim 1, **characterized in that** the reference variable (F) is varied as a function of time.

10. Method for position control for a windscreen wiper (16) that oscillates between two end positions (18.1, 18.2, 18.3), in particular for motor vehicles, having an electronically reversible drive motor (14) and a control unit (12) that compares a controlled variable (R), in particular actual position values (Xist) of the motor (14), with a reference variable (F), in particular specifiable desired position values (Xsoll) of the motor (14) and hence of the wiper (16), and controls the motor (14) by means of a manipulated variable (S), in particular the motor voltage (Um), **characterized in that** the wiping zone (48), which is located between the end positions (18.1, 18.2, 18.3), is divided into two zones (1, 2) and, in the first zone (1), at least the controlled variable (R) or a variable derived from it, preferably motor-speed values, and/or the manipulated variable (S), preferably the motor voltage (Um), is stored and/or weighted in an evaluation unit (22) of the control unit (12), and **in that** the deviation between the controlled variable (R) and the reference variable (F) is used together with the stored and/or weighted variables to determine a correction variable (K), by means of which the reference variable (F) of the control circuit, in particular the desired position values (Xsoll) of the motor (14), is corrected in the subsequent second zone (2).

11. Method according to Claim 10, **characterized in that** the correction variable (K) is determined in accordance with a predeterminable control algorithm in the evaluation unit (22), which is embodied as a microcontroller.

12. Method according to Claim 10, **characterized in that** the reference variable (F) is specified for at least one wiping cycle (T) by means of an operating-mode signal (40) of an operating element (38) and/or by means of an input signal (46) of a rain sensor (44), in particular for the purpose of stipulating at least one speed level of the wiper (16).

## Revendications

1. Dispositif d'essuie-glace (10), en particulier pour véhicules automobiles, servant à réguler la position (X) d'au moins un essuie-glace (16) oscillant entre deux positions extrêmes (18.1, 18.2, 18.3), comportant un moteur d'entraînement (14) réversible électroniquement et une unité de régulation (12) qui compare une grandeur réglée (R), en particulier des valeurs réelles de position (Xist) du moteur (14), à une grandeur pilote (F), en particulier des consignes de position (Xsoll) du moteur (14) et donc de l'essuie-glace (16), et qui règle le moteur (14) au moyen d'une grandeur de réglage (S) en particulier la tension (Um) du moteur, en utilisant au moins une grandeur issue de l'écart entre la grandeur pilote (F) et la grandeur réglée (R) pour effectuer une correction,
**caractérisé en ce que**
la plage de balayage (48) située entre les positions extrêmes (18.1, 18.2, 18.3) est divisée en deux zones (1, 2), et la correction est une grandeur de correction définie dans la première zone (1) et qui corrige la grandeur pilote (F) dans la seconde zone (2) suivante.

2. Dispositif (10) selon la revendication 1,
**caractérisé en ce que**
pour définir la grandeur de correction (K), on utilise des paramètres supplémentaires, de préférence la grandeur de réglage (S) ou des grandeurs dérivées de la grandeur réglée (12), en particulier des valeurs de la vitesse de rotation du moteur.

3. Dispositif (10) selon lune quelconque des revendications 1 ou 2,
**caractérisé en ce que**
la plage de balayage (48) située entre les deux positions d'extrémité (18.1, 18.2, 18.3) est divisée en deux zones (1, 2) et, dans la première zone (1) où se trouve l'essuie-glace (16) quand il vient de quitter une des deux positions extrêmes (18.1, 18.2, 18.3), s'effectue la détermination de la grandeur de correction (K) qui est utilisée pour corriger la grandeur pilote (F) dans la seconde zone (2) qui fait suite.

4. Dispositif (10) selon la revendication 3,
**caractérisé en ce que**
les deux zones (1, 2) de la plage de balayage (48) divisent celle-ci par moitié ou selon la proportion un tiers/deux tiers.

5. Dispositif (10) selon l'une quelconque des revendications 1 ou 2,
**caractérisé en ce qu'**
un organe de manoeuvre élabore des signaux de mode de fonctionnement (40) auxquels l'unité de régulation (12) associe au moins un niveau de vitesse de l'essuie-glace (16).

6. Dispositif (10) selon la revendication 5,
**caractérisé en ce qu'**
à chaque niveau de vitesse sont préfixées différentes consignes de position (Xsoll) en fonction du temps (t), en tant que grandeur pilote (F).

7. Dispositif (10) selon la revendication 1,
**caractérisé en ce qu'**
il comprend un détecteur de pluie (44) élaborant un signal d'entrée (46), les signaux d'entrée (46) correspondant à une quantité d'humidité détectée par le détecteur de pluie (44) sur une vitre dans la zone de balayage (48) de l'essuie-glace, et l'unité de régulation (12) associe une vitesse de balayage de l'essuie-glace (16) à ces signaux.

8. Dispositif (10) selon la revendication 1,
**caractérisé en ce qu'**
à l'unité de régulation (12) peuvent être adressés en tant que signal de référence (Xref) un signal de position extrême et/ou un signal de stationnement émis par un détecteur de fin de course (36) correspondant, en particulier un détecteur à effet Hall ou un disque de contact.

9. Dispositif (10) selon la revendication 1,
**caractérisé en ce que**
la grandeur pilote (F) varie en fonction du temps.

10. Procédé de régulation de la position d'un essuie-glace (16) oscillant entre deux positions extrêmes (18.1, 18.2, 18.3), en particulier pour des véhicules automobiles, comportant un moteur d'entraînement (14) réversible électroniquement et une unité de régulation (12) qui compare une grandeur réglée (R), en particulier des valeurs réelles de position (Xist) du moteur (14), à une grandeur pilote (F), en particulier des consignes de position (Xsoll) du moteur (14) et donc de l'essuie-glace (16), et qui règle le moteur (14) au moyen d'une grandeur de réglage (S) en particulier la tension (Um) du moteur,
**caractérisé en ce que**
la plage de balayage (48) située entre les positions extrêmes (18.1, 18.2, 18.3) est divisée en deux zones (1, 2), et dans la première zone (1), au moins la grandeur réglée (R) ou une grandeur en dérivant, de préférence la valeur de la vitesse de rotation, et/ou la grandeur de réglage (S), de préférence la tension (Um) du moteur, sont mémorisées dans une unité d'exploitation (22) de l'unité de régulation (12) et/ou pondérées, et
à partir de l'écart entre la grandeur réglée (R) et la grandeur pilote (F), et également des grandeurs mémorisées et/ou pondérées, est déterminée une grandeur de correction (K) par laquelle, dans la seconde zone (2) qui suit, est effectuée la correction de la grandeur pilote (F) du circuit de régulation, en particulier la consigne de position (Xsoll) du moteur (14).

11. Procédé selon la revendication 10,
**caractérisé en ce que**
la grandeur de correction (K) est définie dans une unité d'exploitation (22) ayant la forme d'un microcontrôleur, en utilisant un algorithme de régulation donné à l'avance.

12. Procédé selon la revendication 10,
**caractérisé en ce que**

la grandeur pilote (F) pour au moins la durée (T) d'un cycle de balayage, est fixée à l'avance par un signal de mode de fonctionnement (40) d'un organe de manoeuvre (38) et/ou par un signal d'entrée (46) d'un détecteur de pluie (44), en particulier pour déterminer au moins un niveau de vitesse de l'essuie-glace (16).

Fig. 1

Fig. 2